# EUROPEAN PATENT APPLICATION

(11) **EP 2 420 381 A1**
(43) Date of publication of application: **22.02.2012**
(21) Application number: 10382232.6
(22) Date of filing: 16.08.2010
(51) Int. Cl.: B32B 27/32

(54) **Multilayer polypropylene/polyethylene film with improved adhesion**

(71) Applicant: Dow Global Technologies LLC, Midland, MI 48674 (US)
(72) Inventor: NIETO, Jesus, 43850, Cambrils (Tarragona) (ES); PEREZ, Mario, 43002, Tarragona (ES)
(74) Representative: Elzaburu Marquez, Alberto

(57) **Abstract**

The present invention relates to a multilayer structure comprising at least a first layer which predominantly comprises polypropylene and at least a second layer which is adjacent to the first layer and which predominantly comprises polyethylene having a density less than 0.935 g/cm³, the multilayer structure being characterized by having improved adhesion between the first and second layers. The improved adhesion is obtained by incorporating at least 5% by weight of a polyethylene resin having a density of 0.940 g/cm³ or greater into the first layer, the second layer or both layers.

## Description

### Field of the Invention

The present invention relates to a multilayer structure where at least a first layer predominantly comprises polypropylene and at least a second layer which is adjacent to the first layer and which predominantly comprises polyethylene having a density less than 0.935 g/cm³, the multilayer structure being characterized by having improved adhesion between the first and second layers. The improved adhesion is obtained by incorporating at least 5% by weight of a polyethylene resin having a density of 0.940 g/cm³ or greater into the first layer, the second layer or both layers.

### Background and Summary of the invention

Polyethylene is widely used in film applications for its clarity, flexibility, toughness, heat sealability, impact resistance, tear resistance and organoleptic properties.

Polyethylene can be coextruded, laminated or bonded to other polyolefins such as for example polypropylene, in order to impart rigidity to the film. However, it is generally perceived that polyethylene is difficult to adhere to polypropylene well. It has been discovered that this problem of poor adherence to polypropylene layers is particularly pronounced for polyethylene having a density less than about 0.935 g/cm³. Accordingly, it is typically recommended that a tie layer be used between the polyethylene and polypropylene layers to ensure adequate adhesion. Tie layers add cost and complexity to the films and thus, techniques to improve adhesion without the use of tie layers is sought.

It has been found that the addition of a minor amount of polyethylene having a density greater than 0.940 g/cm³ to either a polypropylene layer or a lower density polyethylene (defined to mean a polyethylene having density less than 0.935 g/cm³) layer or both improves the adherence of the layers to each other.

Accordingly, one aspect of the invention is a multilayer film comprising a first and a second layer. The first layer comprises predominantly polypropylene while the second layer comprise predominantly polyethylene having a density less than or equal to about 0.935 g/cm3^{.} The multilayer film is characterized by having the first layer or the second layer or both the first layer and the second layer additionally comprise at least 5% (by weight of the first or second layer) of a polyethylene having a density greater than or equal to about 0.940 ^{g}/_{cm3.}

Another aspect of the present invention is a method for improving the adhesion between a polypropylene layer and a polyethylene layer. The method comprises adding five percent (by weight of the layer) of a polymeric material to the polypropylene layer, the polyethylene layer or both the polypropylene and the polyethylene layers, wherein the polymeric material comprises at least 50 percent (by weight of the third polymeric material) of units derived from ethylene, and has a density greater than or equal to 0.940 g/cm³.

### DETAILED DESCRIPTION OF THE INVENTION

### Analytical Methods:

Unless otherwise indicated, the following analytical methods are used in the present invention:
Melt flow rate (MFR) for polymers comprising at least 50 percent by weight of units derived from propylene is measured according to ASTM D1238, 2.16 kg, 230°C.
Melt Index (MI) for polymers comprising at least 50 percent by weight of units derived from ethylene is measured according to ASTM D1238, 2.16 kg, 190°C.
Density is determined according to ASTM D-792.
The term molecular weight distribution or "MWD" is defined as the ratio of weight average molecular weight to number average molecular weight (M_{w}/Mₙ). M_{w} and Mₙ are determined according to methods known in the art using conventional high temperature gel permeation chromatography (GPC).
Peel Strength is determined according to the method described in the Experimental section.

The multilayer films of the present invention comprise a first layer which is primarily made from a polypropylene polymer. For purposes of this invention a polypropylene polymer is one in which more than 50 percent (by weight of the polymer) of the polymer comprises a unit derived from propylene. For purposes of the present invention, the term "polypropylene polymers" includes homopolymer polypropylene, random copolymers of propylene with one or more additional alpha-olefins (preferably ethylene or a C₄-C₁₀ alphaolefin), polypropylene impact copolymers, and combinations of two or more of the foregoing..

The propylene-based polymer can advantageously be homopolymer polypropylene or a random propylene-based copolymer (for purposes of this application, the term "copolymer" includes terpolymers). The preferred homopolymer or random copolymer polypropylene preferably has a melt flow rate (as measured according to ASTM D1238, 2.16 kg, 230°C) of from 0.5 to 30 g/10 min, more preferably 5 to 10, most preferably greater than, or equal to, 8 to 10 g/ 10 min.

The homopolymer polypropylene can be an isotactic polypropylene homopolymer having an isotacticity of from about 89 to 99% (as measured by l3C NMR spectroscopy using meso pentads).

The preferred homopolymer or random copolymer polypropylene used in the polypropylene layer has a density greater than, or equal to, 0.89 g/cc and can be up to preferred maximum of 0.91 g/cm.

The preferred homopolymer or random copolymer polypropylene used in the polypropylene layer has a MWD greater than, or equal to, 2.5, preferably greater than, or equal to, 3.5.

The preferred homopolymer or random copolymer polypropylene used in the polypropylene layer of the films of the present invention may advantageously be produced using Ziegler-Natta or metallocene catalysts.

Preferably the polypropylene comprises at least 80% homopolymer polypropylene, propylene impact copolymer or random copolymer polypropylene, more preferably at least 90% homopolymer polypropylene, propylene impact copolymer or random copolymer polypropylene and can comprise essentially all of the polymer material used in the polypropylene layer.

Examples of suitable homopolymer polypropylene include DXSE66 , or H357-09RSB produced by The Dow Chemical Company and examples of suitable random copolymer polypropylene include DS6D21, DS6D81, and INSPIRE™ 361 produced by The Dow Chemical Company and and suitable examples of propylene impact copolymers include INSPIRE™ 137 also produced by The Dow Chemical Company.

When the polypropylene layer comprises one or more resins other than the homopolymer propylene or random copolymer polypropylene, the other resins should be selected so that they are compatible with the homopolymer polypropylene or random copolymer polypropylene. Suitable resins include propylene-based plastomer or elastomers, polyethylene materials having a density of less than 0.935 g/cm³, and ethylene polar copolymers such as ethylene-vinyl acetate or ethylene-acrylic acid .

The polypropylene layer may contain other additives such as mineral oil or other plasticizers. Other additives generally known in the art include materials such as inorganic fillers, conductive fillers, pigments, nucleators, clarifiers, antioxidants, acid scavengers, flame retardants, ultraviolet absorbers, processing aids such as zinc stearate, extrusion aids, slip additives, permeability modifiers, anti-static agents, antiblock additives and other thermoplastic polymers.

Also, it is contemplated that combinations of two or more different propylene-based polymers may be used in the polypropylene layer.

The multilayer films of the present invention comprise a second layer which is primarily made from a polyethylene polymer having a density less than or equal to 0.935 5 g/cm³. For purposes of this invention a polyethylene polymer is one in which more than 50 percent (by weight of the polymer) of the polymer comprises units derived from ethylene. Polyethylene polymers includes high pressure low density type low density polyethylene (LDPE), Ziegler Natta catalyzed linear low density polyethylene (LLDPE), single site catalyzed (including metallocenes) linear low density polyethylene (m-LLDPE), medium density polyethylene (MDPE) so long as the MDPE has a density no greater than 0.935 g/cm³; and copolymers of ethylene and a polar copolymer such as ethylene-vinyl acetate or ethylene-acrylic acid, as well as combinations of two or more of the forgoing. These polyethylene resins used in the second layer are generally known in the art.

"LDPE" may also be referred to as "high pressure ethylene polymer" or "high pressure low density type resin" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, herein incorporated by reference). Copolymers of ethylene with a polar comonomer such as ethylene-vinyl acetate or ethylene-acrylic acid are typically made under similar process conditions as is generally known in the art.

"Linear Low Density Polyethylene" or "LLDPE" is understood to mean any linear (including linear, substantially linear, homogeneously branched or heterogeneously branched) polyethylene copolymer or homopolymer. The Linear Low Density PE can be made by any process such as gas phase, solution phase, or slurry or combinations thereof. The Linear Low Density PE may consist of one or more components, each of which is also a Linear Low Density PE.

Medium Density Polyethylene ("MDPE") and High Density Polyethylene ("HDPE") are also understood to mean any linear polyethylene copolymer or homopolymer. LLDPE, MDPE, and HDPE are similar material which differ in density according to the amount of comonomer incorporation. For purposes of the present invention "LLDPE" is deemed to indicate linear polyethylene having a density up to about 0.935 g/crri , "MDPE" is deemed to indicate linear polyethylene having a density in the range of from 0.935 g/cm³ to 0.950 g/cm³ and "HDPE" is deemed to indicate linear polyethylene having a density greater than 0.950 g/_{cm}³.

The third required polymer for use in the present invention is a polyethylene having a density greater than or equal to 0.940 g/cm³. The third polymer can be added to either the polypropylene layer or the lower density polyethylene layer or both the polypropylene layer and the polyethylene layer. The third polymer should be added in an amount of five percent (5%) or more by weight of at least one layer to which it is added. The higher density polyethylene can advantageously be added in an amount up to and including 20% by weight of the first layer or up to and including 40% by weight in the second layer. For the first layer it is preferred that the third polymer be added in an amount of from 5 to 20%, by weight of the first layer more preferably from 7 to 10%. For the second layer, it is preferred that the third polymer be added in an amount of from 5 to 20% by weight of the second layer, most preferably from 10 to 18%.

It is preferred that the higher density polyethylene used as the third polymer in the present invention have a molecular weight distribution (Mw/Mn) of 2.5 or less and a weight average molecular weight (Mw) of 100,000 or greater, more preferably 150,000 or greater, and even more preferably 250,000 or greater.

The polyethylene having a density greater than or equal to 0.940 g/cm³ for use as the third polymer of the present invention can be an MDPE, or an HDPE, or combinations of the foregoing.

The film structures of the present invention are characterized by having the first layer being adjacent to the second layer, meaning that there is no intermediate layer such as a tie layer between the first and second layers.

The film structures of the present invention may comprise additional layers, so long as they are not in between the first layer and the second layer. Such layers may be additional polyolefin layers, including layers which are identical to either the first or the second layer.

### Examples

The following resins are used in the following examples:
Resin A is a polypropylene impact copolymer having a melt flow rate (230°C, 2.16 kg) of 0.4 g/10 min. and a density of 0.90 g/cm³, commercially available from The Dow Chemical Company as INSPiRE™ 114
Resin B is a Ziegler-Natta catalyzed ethylene/1-octene LLDPE having a melt index (190°C, 2.16 kg) of 1.05 g/10 min and a density of 0.919 g/cm³.
Resin C is a LDPE made under the high pressure; free radical process having a melt index (190°C, 2.16 kg) of 0.9 g/10 min and a density of 0.921 g/cm³.
Resin D is an HDPE having a melt index (190°C, 5 kg) of 0.3 g/10 min and a density of 0.95 8 g/cm³.
Resin E is an HDPE having a melt flow index (190°C, 2.16 kg) of 0.4 g/10 min and a density of 0.958 g/cm³.
Resin F is a single site catalyzed ethylene/1-octene LLDPE having a melt index (190°C, 2.16 kg) of 1.0 g/10 min and a density of 0.885 g/cm³
Resin G is an ultra low density polyethylene with melt index (190°C, 2.16 kg) of 1.0 dg/min and a density of 0.912 g/cm3.

The above resins are used to make a series of films as presented in Table I. The films are co-extruded on a Collin CR 136/350 cast film extruder outfitted with two extruders, one with 25mm barrel diameter and the other with 30mm barrel diameter, and a water-quenched chill roll. The extruded film is collected at a speed of about 3.5 m/min. The temperature profiles are 230, 250, 250, 250 and 250°C for the extruder containing polypropylene, and 200, 220, 230, 230 and 230°C for the extruder containing LLDPE and 240°C for the die. In the case of LDPE extrusion, the temperature profile is set at 180, 190, 200, 210 and 220°C and the die temperature 220°C. Film thickness is about 200 µm. The third component (HDPE or MDPE) is mixed by dry mixing pellets of the third component with pellets of the first and/or second component and shaking for 5 minutes prior to being added to the extruder. Films are stored for two days at lab temperature before being analyzed.

These films are then evaluated to determine the peel strength between the layers. Before running the peel test, two films, each with thickness of 500 microns are hot-pressed as back sheets of the co-extruded films to prevent the elongation of the sample during the measurement. In the present Example the back sheets are made from an ethylene/1-octene copolymer with melt index of 1.0 dg/min and density of 0.916 g/cm³, but any other material that seals reasonably well to both PE and PP, or any rigid sheet which can be glued to both PE and PP can also be used. The back sheets may have projections on the side which is not in contact with the coextruded films to facilitate the peel testing. Fifteen mm wide by 100 mm long samples of the films are then pressed together under press conditions of are 160°C, 16 bar for a duration of 35 seconds. To initiate the peeling, where possible, the projections are first pulled slightly apart by hand. Then, using the tensile tester (Instron) the projections of the back sheet layers are pulled at a constant speed of 125 mm/min. The initial distance between clamps is 35 mm. A force vs. elongation curve will show an initial rapid increase in force, followed by a stabilization zone where the force reaches a plateau. At least five specimens are tested for each sample and the averaged applied force (in N) in this stabilized plateau zone, recorded for 10 cm of film peeling is reported for each example in Table I.

**Table 1**

| Example | Layer 1 | Layer 2 | Peel Force (N) |
|---|---|---|---|
| Comparative 1 | 100% Resin A | 100% Resin B | 1.3 |
| 1 | 80% A/20% D | 100% Resin B | 4.5 |
| 2 | 100% Resin A | 90% B/ 10% E | 5.4 |
| | | | |
| Comparative 2 | 100% Resin A | 100% Resin C | 0.3 |
| | | | |
| Comparative 3 | 100% Resin A | 80% C/ 20% F | 0.6 |
| Comparative 4 | 100% Resin A | 100% Resin G | 1.1 |
| 3 | 100% Resin A | 90% G/10% D | 3.7 |

## Claims

1. A multilayer film comprising:
a) a first layer comprising more than 50 percent (by weight of the first layer) of a first polymeric material which comprises at least 50 percent (by weight of the first polymeric material) of units derived from propylene;
b) a second layer comprising more than 50 percent (by weight of the second layer) of a second polymeric material which comprises at least 50 percent (by weight of the second polymeric material) of units derived from ethylene, and which second polymeric material has a density less than or equal to 0.935 g/cm³;
wherein the first layer is adjacent to the second layer, and
wherein the first layer, the second layer or both the first and the second layers contain(s) at least 5 percent (by weight of the layer) of a third polymeric material which comprises at least 50 percent (by weight of the third polymeric material) of units derived from ethylene, and which third polymeric material has a density greater than or equal to 0.940 g/_{cm}³_{.}

2. The multilayer film of claim 1 wherein the third polymeric material is an HDPE or MDPE.

3. The multilayer film of claim 1 wherein the first layer comprises from 5 to 20% (by weight of the first layer) of the third polymeric material.

4. The multilayer film of claim 1 wherein the second layer comprises from 5 to 40% (by weight of the first layer) of the third polymeric material.

5. The multilayer film of claim 1 wherein the third polymeric material has a molecular weight distribution (Mw/Mn) of 2.5 or less.

6. The multilayer film of claim 2 wherein the third polymeric material has a weight average molecular weight (Mw) of 100,000 or greater.

7. The multilayer film of claim 6 wherein the third polymeric material has a weight average molecular weight (Mw) of 150,000 or greater.

8. The multilayer film of claim 7 wherein the third polymeric material has a weight average molecular weight (Mw) of 250,000 or greater.

9. The multilayer film of claim 1 further comprising one or more additional layers.

10. The multilayer film of claim 1 wherein the multilayer film has a thickness in the range of 20 to 300 microns.

11. The multilayer film of claim 1 wherein the first layer has a thickness in the range of 2 to 280 microns.

12. The multilayer film of claim 1 wherein the second layer has a thickness in the range of 2 to 280 microns.

13. The multilayer film of claim 1 further **characterized by** having a peel strength between the first and the second layers greater than 3.0 N.

14. A method of improving the adherence between a first film layer and a second film layer wherein the first film layer comprises a predominance of a first polymeric material which comprises at least 50 percent (by weight of the first polymeric material) of units derived from propylene, and wherein the second film layer comprises a predominance of a second polymeric material which comprises at least 50 percent (by weight of the second polymeric material) of units derived from ethylene, and which second polymeric material has a density less than or equal to 0.935 g/cm³; wherein the improvement comprises adding a third polymeric material to the first layer, the second layer or both the first and the second layers, wherein the third polymeric material comprises at least 50 percent (by weight of the third polymeric material) of units derived from ethylene, and has a density greater than or equal to 0.940 g/cm³, and wherein the third polymeric material is added in an amount of at least 5% by weight of the first layer, the second layer or both the first and the second layers.
